# EUROPEAN PATENT APPLICATION

(11) **EP 0 937 496 A2**
(43) Date of publication of application: **25.08.1999**
(21) Application number: 99200192.5
(22) Date of filing: 25.01.1999
(51) Int. Cl.: B01J 13/02, A23L 1/22

(54) **Microcapsules of gelatin and carboxy methyl cellulose**

(30) Priority: 11.02.1998 EP 98200431
(71) Applicant: Unilever N.V., 3130 AC Vlaardingen (NL); UNILEVER PLC, London EC4P 4BQ (GB)
(72) Inventor: Bakker, Marinus Adriaan Evert, 3133 AT Vlaardingen (NL); Galema, Saskia Alexandra, Sharnbrook, Bedford MK44 1LQ (GB); Visser, Adrianus, 3133 AT Vlaardingen (NL)
(74) Representative: Wurfbain, Gilles L.

(57) **Abstract**

The invention relates to microcapsules, wherein the microcapsules have a capsule wall comprising gelatin and CMC, wherein the molar mass of the CMC is less than 250.000. The invention further relates to a process for preparing such the microcapsules by complex coacervation technique. The microcapsules according to the invention are suitable as a flavour delivery system

## Description

### Field of the invention

The present invention relates to microcapsules, wherein the microcapsules have a capsule wall comprising gelatin and CMC, wherein the molar mass of the CMC is less than 250.000. The invention further relates to a process for preparing such the microcapsules by complex coacervation technique. The microcapsules according to the invention are suitable as a flavour delivery system.

### Background of the invention

Micro-encapsulation is a technique well known and applied in e.g. developing flavour delivery systems. In such cases, microencapsulation is generally undertaken for obtaining a controlled release of the flavouring composition. It is generally required that flavouring and/or aromatising compounds are released at a specific moment in time, generally close to the end use (i.e. final preparation stage and/or consuming the foodstuff). Such a release is then preferably obtained after a specific trigger, which can be, inter alia, heat, change in pH, moisture, shear or combinations thereof. Preferably, the flavour delivery system should be such that it prevents or slows down degradation and/or evaporation of the flavouring composition prior to the end use. This is in particular the case when the flavouring compound(s) are introduced in the foodstuffs at an early stage in the manufacture of the foodstuff.

In EP 633732 (Tastemaker) examples of encapsulation techniques (through complex coacervation) and applications thereof are disclosed. In this reference, it is said that complex coacervates can be prepared from combinations of gelatin and a polysaccharide (such as alginates, casein, gum arabic, CMC). The only disclosed combination is gelatin and CMC (carboxymethyl cellulose), without further specifying the properties of the gelatin and CMC. The coacervates so produced are said to survive food processing, but to release its content upon chewing the foodstuff which contains said coacervates.

In FR 2732240 complex coacervation using combinations of gelatin and one of alginate, carrageenan, xanthan, gum arabic, CMC and others for preparation of the walls of the microcapsules are proposed.

In WO 96/20612 (Tastemaker) microcapsules of fish gelatin and CMC/gum arabic are reported.

### Summary of the invention

Although it is disclosed how to prepare complex coacervates for encapsulating flavours from combinations of gelatin and CMC, it has not been known how to control the size of the coacervates so produced. As different sized microcapsules are expected to behave differently e.g. upon shear and small flavour molecules will diffuse out of microcapsules with a different size with a different velocity, it can be advantageous to control the size of the microcapsules, as it opens the possibility of a true flavour delivery system with a more tailor-made flavour delivery.

Hence, there is a need for microcapsules of a specific size. Preferably, the size should be (to at least some extent) predictable. Consequently, there is a need for a process which yields such microcapsules of a specific (preferably to some extent predictable) size in a convenient way.

It has now been found that the above can be achieved by microcapsules having a capsule wall comprising gelatin and carboxymethyl cellulose (CMC), wherein the CMC has a molecular weight of less than 250.000. Preferably, the molecular weight is equal to or less than 105.000. For practical results, the molecular weight for the CMC should preferably be 38.000 or more.

It has also been found that the above can be achieved by a process for the preparation of microcapsules according to the above, which process is complex coacervation and requires at least the steps of:
a) preparing an aqueous solution (1) of gelatin and an aqueous solution (2) of CMC, the CMC having a molecular weight of less than 250.000
b) mixing solutions (1) and (2)
c) adjusting the pH of the mixture to a value of at least 3.0 and less than 5.0.
d) cooling the mixture to a temperature of less than 30°C
e) isolating the formed microcapsules.

Preferably, the microcapsules according to the invention are used as a flavour delivery system. Flavour is herein to be understood as comprising both flavouring and aromatising compounds.

### Detailed description of the invention

In the complex coacervates according to the invention, vatious ratios of gelatin:CMC can be used. It is preferred, however, if said ratio is between 1:2 and 10:1. More preferred is a ratio of between 1:1 and 4:1. The carboxymethyl cellulose employed in the present invention is preferably sodium-carboxymethyl cellulose (Na-CMC).

For use in the present invention, the CMC has preferably a degree of substitution (DS) of between 0.1 and 1.5. More preferred is a degree of substitution of at least 0.7 and 1.0 or less.

In the present invention, the size of the coacervates (expressed as D_{3.2}) can be measured using a method based on laser diffraction. The D_{3.2} (surface weighed mean diameter) is a standard method for expressing mean particle size. It has been found in the present invention that there is a relation between the molar mass of the CMC used in the complex coacervation with gelatin on the one hand and the obtained size of the coacervate particles on the other hand, as can be seen in the example below. It was found, for example, that in order to obtain relatively large coacervate particles (having a D_{3.2} of 20µm or more) using complex coacervation of gelatin and CMC, the CMC employed should have a molar mass (MW) of around 45000 or less. On the other hand, if coacervate particles of medium size are preferred (having a D_{3.2} of 12-13µm) the CMC employed should have a molar mass (MW) of around 60000-70000. Small size coacervate particles (having a D_{3.2} of 6-8µm) using complex coacervation of gelatin and CMC can be obtained if the CMC employed has a MW of either 50000-55000 or around 110000.

It was found that when the coacervate particles are filled with oil, the so-prepared microcapsules generally have a larger diameter (size) than the empty coacervates. The difference in empty-coacervate size and oil-filled microcapsules depends e.g. on the technique which is chosen to prepare oil-filled microcapsules by coacervation. The coacervates according to the present invention have preferably a size, when expressed as D_{3.2}, between 5 and 80 micron. The oil-filled microcapsules so-produced have e.g. a size (which can be estimated using light-microscopy) of 50 microns or more and 350 microns or less, depending on the molar mass of the CMC and on the encapsulation technique. For example, relatively large microcapsules will have a size of 150-350 (or even 250-350) microns, whereas relatively small microcapsules will have a size of 50-250 (or even 50-150) microns.

The size of the microparticles or capsules that is desired will depend e.g. on the use and type of flavour that is to be included in the microcapsules. For example, large microcapsules are expected to show a (relatively) smaller loss due to diffusion of volatile flavour contained in the microcapsules than small particles (following the surface/content ratios). Hence, for very volatile flavours the use of large microcapsules may be preferred to reduce the loss by diffusion and evaporation. On the other hand, smaller microcapsules are expected to be more resistant to shear forces which occur in food processing than large microcapsules. Hence, for applications in which high shear forces are expected (e.g. in the preparation of spreads, involving the use of votators) relatively small mirocapsules may be the preferred option when designing a flavour delivery system (e.g. for butter flavour in the case of spreads).

As the microcapsules are prepared from an aqueous solution/disperison, it is preferred that the material to be encapsulated is either only sparingly soluble in water or better soluble in an oil phase than in a water phase. An example of the first is a solid, non-water soluble material such as a granulated non-water soluble medicament like paracetamol (although not a flavouring compound, it can be encapsulated just as well). An example of the second is an oil-soluble flavouring compound such as lemon oil.

As the microcapsules are developed as an aroma- or flavour delivery system, it is preferred that the content of the microcapsules according to the present invention comprises a flavouring and/or aromatising compound. However, application the microcapsules according to the invention is not limited to flavour delivery system. Examples of such compounds may be certain vitamins or medicaments.

When preparing oil-containing microcapsules according to the invention using the process as described above, it is preferred that the oil phase in an amount of at least 0.5% and less than 25% by weight is dispersed in the mixture in the above set out process, after step b) and prior to step d). Said oily phase or composition may be a flavour or aroma composition as such, or it may be a carrier oil containing dissolved therein a flavour or aroma compound.

In the process according to the invention, coacervation is effected at an acidic pH. This is achieved by adjusting the pH of the mixture from which the coacervate particles are to be formed to a value of at least 3.8 and less than 4.5. Preferably, the pH is adjusted in the process as set out above at step c).

Although the coacervation can be carried out at a range of temperatures, it has been found that temperatures below the gelation temperature of gelatin are preferred, and hence the temperature should preferably be 30°C or lower. Preferably, the coacervation is effected from a mixture at a temperature of less than 10°C.

When preparing the complex coacervates according to the invention solutions are made of gelatin and of CMC (preferably Na-CMC). The concentrations of such solutions are preferably such that the amount of dry matter (DM, in wt.%) higher than 0.5% and lower than 5% for each solution. More preferred are solutions each containing more than 1% and less than 3% dry matter.

The invention furter extends to flavour delivery systems comprising microcapsules according to the invention as described above, wherein the content of the microcapsule comprisis a flavour and/or aroma compound.

The microcapsules prepared according to the invention can be used as a slurry in water as obtained, or can be further dried using e.g. techniques as are disclosed in EP 633733.

The invention is further exemplified by the following examples, which are to be understood as to be non-limiting.

### Example 1

A range of sodium-CMC's having different molar weights was obtained by hydrolysis of a commercial Na-CMC (ex Aldrich, DS=0.7, molar weight of 90.000) using cellulase (ex Sigma, 0.5 IU/mg). Molar weight was measured using GPC. Other Na-CMC's: MW 250000, DS=1.2, and MW 700000, DS=0.9, both ex Aldrich.

Two solutions, one containing gelatin (2.8%, Geltec, type SG-730-N, ex Extraco, Sweden) and one containing CMC (1.2%) were prepared in distilled water at 45°C. Both solutions were adjusted to pH 6.5 using 1 N NaOH solution. To the solution containing gelatin the CMC-solution was added and dispersed using Ultra Turrax equipment.

Thereafter, the pH was adjusted to 4.25 using a 1 N Hcl solution and the mixture was cooled down (under stirring) to 25°C. After cooling down, the formation of coacervates was recognized by increased turbidity. The so-formed coacervates were hardened by adding, under stirring, glutaraldehyde. After a reation time of 4 hours at 25°C the so-formed coacervates were filtered off using a Buchner funnel and stored as a slurry at 5°C. The existance of coacervates was recognised by microscopic observation.

The size of the coacervates (expressed as D_{3.2}) was measured using Helos equipment, based on laser diffraction. The D_{3.2} (surface weighed mean diameter) is a standard method for expressing mean particle size.

Results of the above experiments are set out in Table 1. As can be seen, the size of the coacervates depends on the molar weight of the CMC used.

**Table 1.**

| **complex coacervation of CMC with gelatin.** | | |
|---|---|---|
| **CMC (code)** | **MW** | **part. size (D**_{**3.2**}**, µm)** |
| AV27088D | 38000 ± 4000 | 45.5 |
| AV27088C | 43000 ± 4000 | 22.8 |
| AV28011B | 43000 ± 5000 | 11.1 |
| AV27088B | 50000 ± 4000 | 8 |
| AV28011C | 53000 ± 7000 | 7.8 |
| AV28011E | 58000 ± 10000 | 9.9 |
| AV28012B | 64000 ± 6000 | 13.4 |
| AV28012A | 68000 ± 10000 | 12.4 |
| CMC | 90000 | 12.8 |
| CMC ulv | 105000 | 6.3 |
| CMC | 250000 | no coacervates formed |
| CMC | 700000 | no coacervates formed |

### Example 2

Example 1 was repeated for various CMC-fractions with the exception that to the gelation solution prior to mixing with the CMC solution sunflower oil was added (in an amount of 5 wt% based on the total formulation). The oil phase was dispersed using Ultra Turrax equipment, followed by the addition of the CMC-solution. For the remainder, the procedure of example 1 was followed.

The sizes of the so-prepared oil-containing coacervate microcapsules was estimated using light-microscopy. The results are set out in table 2.

**Table 2**

| Code | Mw | Coacervate particle size (D_{3.2}, µm) | Encapsulate particle size (µM) (*) |
|---|---|---|---|
| AV 27088 C | 43000 ± 4000 | 22.8 | 150-350 |
| AV 28016 | 44000 ± 5000 | 23.4 | 150-350 |
| AV 28015 A | 55000 | 9.3 | 100-250 |
| CMC | 90000 | 12.8 | 50-150 |

| | | | |
|---|---|---|---|
| (*) estimated by microscopic observation | | | |

## Claims

1. Microcapsules having a capsule wall comprising gelatin and carboxymethyl cellulose (CMC), wherein the CMC has a molecular weight of less than 250.000.

2. Microcapsule according to claim 1, wherein the CMC has a molecular weight of 105.000 or less.

3. Microcapsule according to claim 1, wherein the CMC has a molecular weight of 38.000 or more.

4. Microcapsules according to claim 1, wherein the ratio gelatin:CMC of the microcapsules is between 1:2 and 10:1.

5. Microcapsules according to claim 1, wherein the CMC is sodium-CMC.

6. Microcapsules according to claim 1, wherein the CMC has a degree of substitution (DS) of between 0.1 and 1.5.

7. Microcapsules according to claim 1, wherein the size of the microparticles is between 50 and 350 micron.

8. Microcapsules according to claim 1, wherein the content comprises an oil.

9. Microcapsules according to claim 1, wherein the content comprises a flavouring and/or aromatising compound.

10. Process for the preparation of microcapsules according to claim 1-9, which process requires at least the steps of:
a) preparing an aqueous solution (1) of gelatin and an aqueous solution (2) of Na-CMC
b) mixing solutions (1) and (2)
c) adjusting the pH of the mixture to a value of at least 3.0 and less than 5.0.
d) cooling the mixture to a temperature of less than 30°C
e) isolating the formed microcapsules.

11. Process according to claim 10, wherein prior to step c) an oily composition in an amount of at least 0.5% and less than 25% by weight is dispersed in the mixture or in the gelatin solution.

12. Process according to claim 11, wherein the pH at step c) is adjusted to at least 3.8 and less than 4.5.

13. Process according to claim 10, wherein cooling (step d)) is effected to a temperature of less than 10°C.

14. Process according to claim 10, wherein the amount of dry matter (DM, in wt.%) of the solutions used for complex coacervation is higher than 1% and lower than 5%.

15. Flavour delivery system comprising microcapsules according to claim 1-9, wherein the content of the microcapsule comprisis a flavour and/or aroma compound.
